# EUROPÄISCHE PATENTSCHRIFT

(11) **EP 1 901 930 B1**
(45) Veröffentlichungstag und Bekanntmachung des Hinweises auf die Patenterteilung: **19.09.2012**
(21) Anmeldenummer: 06753799.3
(22) Anmeldetag: 23.05.2006
(51) Int. Cl.: B60C 15/06

(54) **FAHRZEUGLUFTREIFEN MIT VERSTÄRKTER WULSTKONSTRUKTION**
VEHICLE TYRE COMPRISING A REINFORCED THICKENED CONSTRUCTION
PNEU DE VEHICULE A STRUCTURE DE TALON RENFORCEE

(30) Priorität: 01.07.2005 DE 102005030819
(43) Veröffentlichungstag der Anmeldung: 26.03.2008
(73) Patentinhaber: Continental Reifen Deutschland GmbH, 30165 Hannover (DE)
(72) Erfinder: KRAUS, Martin, Josef, 30167 Hannover (DE); MAZUR, Heinz-Bernhard, 30900 Wedemark (DE)
(74) Vertreter: Finger, Karsten
(86) Internationale Anmeldenummer: PCT/EP2006/004873
(87) Internationale Veröffentlichungsnummer: WO 2007/003246

(56) Entgegenhaltungen:
- EP-A- 0 375 443
- EP-A- 1 288 024
- GB-A- 2 218 676
- US-A- 4 811 773
- US-A1- 2001 018 941
- PATENT ABSTRACTS OF JAPAN Bd. 1998, Nr. 04, 31. März 1998 (1998-03-31) & JP 09 309303 A (BRIDGESTONE CORP), 2. Dezember 1997 (1997-12-02)
- PATENT ABSTRACTS OF JAPAN Bd. 017, Nr. 139 (M-1385), 22. März 1993 (1993-03-22) & JP 04 317806 A (YOKOHAMA RUBBER CO LTD:THE), 9. November 1992 (1992-11-09)

## Beschreibung

Die Erfindung betrifft einen Fahrzeugluftreifen, insbesondere für LKW, in radialer Bauart, mit einer ein- oder mehrlagigen Karkasseinlage mit Festigkeitsträgern aus Stahlcord oder einem Werkstoff ähnlicher Festigkeit, wobei die Karkasseinlage in Wulstbereichen mit Kemprofilen um Wulstkerne Hochschläge bildend umgeschlagen ist, welche bis auf eine, bezogen auf den Felgeneckpunkt, in radialer Richtung gemessene Höhe h₁ reichen, wobei die Wulstbereiche mit mehreren Verstärkungslagen verstärkt sind, welche als Gewebelagen mit zugfesten, textilen Festigkeitsträgern ausgeführt sind, wobei eine der textilen Verstärkungslagen auf der einen Seite in direktem Kontakt mit dem Wulstkern und auf der anderen Seite in direktem Kontakt mit der Karkasseinlage den Wulstkern umläuft, reifeninnenseitig zwischen dem Kernprofil und der Karkasseinlage bis auf eine, bezogen auf den Felgeneckpunkt, in radialer Richtung gemessene Höhe h₃ reicht, die zwischen dem 0,1-Fachen und dem 0,47-Fachen der Querschnittshöhe des Reifens beträgt, und reifenaußenseitig zwischen dem Kernprofil und dem Hochschlag der Karkasseinlage in einem Abstand h₂ radial innerhalb des Hochschlages endet.

Ein derartiger Reifen ist beispielsweise aus der EP 1 288 024 A bekannt. Dieser Reifen ist vor allem zur Verwendung an Flugzeugen vorgesehen und weist eine mehrlagige Karkasseinlage und eine um den Wulstkern herumgeschlagene Kernfahne auf. Die Kernfahne bildet einen axial inneren und einen axial äußeren Schenkel, die knapp radial außerhalb des Wulstkernes enden, wobei der axial weiter innen verlaufende Schenkel der Kernfahne geringfügig kürzer ist als der axial äußere Schenkel.

Die EP 0 375 443 A befasst sich mit einem Fahrzeugluftreifen mit mehreren textilen Verstärkungslagen in den Wulstbereichen. Die Verstärkungslagen bestehen aus jeweils zumindest zwei Schichten aus Faserkorden und sind zueinander derart angeordnet, dass sie in unmittelbarer Nähe des Wulstkernes im geringsten Abstand und an ihren vom Wulstkern entfernten Enden im größten Abstand zueinander verlaufen.

Aus der GB 2 218 676 A ist ein Fahrzeugluftreifen mit einer mehrlagigen Karkasseinlage bekannt, in dessen Wulstbereich ebenfalls Verstärkungslagen vorgesehen sind, wobei die mit dem Wulstkern in Kontakt verlaufende Verstärkungslage den Wulstkern maximal zur Hälfte umläuft.

Ein weiterer Reifen ist beispielsweise aus der DE 30 43 726 A bekannt. Gemäß einer bevorzugten Ausführungsform ist dieser Reifen im Wulstbereich mit vier Gewebelagen verstärkt. Die Lagen sind derart angeordnet, dass sie jeweils zwischen der Karkasseinlage und der Reifenaußenwand, welche entweder von der Innenschicht oder der Seitenwand gebildet wird, verlaufen.

Aus der EP 1 129 870 A ist ein Run-Flat-Reifen bekannt, welcher somit ohne inneren Luftdruck über eine gewisse Dauer gefahren werden kann, wobei der Reifen zu diesem Zweck mit mondsichelförmigen Verstärkungsprofilen aus Gummi in den Seitenwänden und in den Wulstbereichen jeweils mit zumindest einer mit Stahlcord verstärkten zusätzlichen Lage zwischen dem Kernprofil und der Karkasseinlage verstärkt ist.

Aus dem US Patent 4,852,626 ist eine Wulstverstärkung für einen LKW Reifen bekannt, bei dem die Karkasseinlage in Nähe des Wulstkernes zwischen zwei mit Stahlcord verstärkten Verstärkungslagen verläuft, die auf eine bestimmte Weise angeordnet sind und deren Festigkeitsträger zueinander gekreuzt angeordnet sind.

Es sind noch weitere Wulstverstärkerkonstruktionen für LKW Reifen, sowohl für Steilschulter- als auch für Schrägschulterreifen, bekannt. Eine dieser Wulstverstärkerkonstruktionen weist zwischen zwei und vier im Kreuzverband angeordnete Gewebelagen auf, welche radial außerhalb des Umschlages der Karkasseinlage verlaufen, aneinander anliegen und zueinander gestaffelt sind. Bei Schrägschulterreifen werden im Allgemeinen drei oder vier derart angeordnete Gewebelagen vorgesehen. Bei einer anderen bekannten Ausführung ist als Wulstverstärker eine einzige Lage aus gummierten Stahlcorden vorgesehen, welche radial außerhalb des Karkasshochschlages und unterhalb des Wulstkernes verläuft. Bei einer weiteren Alternative unter Verwendung einer Wulstverstärkerlage mit Stahlcorden als Festigkeitsträger verläuft diese Lage nicht nur radial außerhalb des Hochschlages sondern komplett um den Wulstkern und an der Innenseite relativ weit neben dem Kemprofil. Bei LKW Reifen, die besonders belastbar sein sollen, ist es auch bekannt, Kombinationen aus Verstärkungslagen mit textilen Festigkeitsträgern und Verstärkungslagen mit Stahlcorden als Festigkeitsträger vorzusehen.

Wegen des geringen Gewichtes aber auch der niedrigeren Herstellkosten besteht der Wunsch, auch in hochbelastbaren LKW Reifen Wulstverstärkerverbände vorsehen zu können, die ausschließlich Gewebelagen mit textilen Festigkeitsträgern sind.

Der Erfindung liegt somit die Aufgabe zu Grunde, bei einem Reifen der eingangs genannten Art einen aus zumindest einer Gewebelage mit textilen Festigkeitsträgern bestehenden Wulstverstärker vorzusehen und dabei die erforderliche Haltbarkeit und Lebensdauer des Reifens, je nach dessen Einsatzzweck, sicherzustellen.

Gelöst wird die gestellte Aufgabe erfindungsgemäß dadurch, dass die den Wulstkern in direktem Kontakt mit diesem umlaufende Verstärkungslage an der Seite des Hochschlages der Karkasse bis auf eine, vom Felgeneckpunkt aus gemessene Höhe h₂ reicht, die zwischen 10 % und 80 % der ebenfalls vom Felgeneckpunkt gemessenen Höhe h₁ des Hochschlages beträgt, und dass h₂ < h₁ < h₃ gilt

Es hat sich herausgestellt, dass je nach Einsatzbereich, bereits eine einzige, den Wulstkern umlaufende und außenseitig von der Karkasseinlage umgebene textile Verstärkungslage ausreicht, die Wulstbereiche von LKW Reifen derart zu verstärken, dass die erwünschte Haltbarkeit und Belastbarkeit erreicht wird. Auf die Verwendung von Stahlcord in Verstärkungslagen im Wulstbereich kann verzichtet werden. Die gemäß der Erfindung in jedem Fall vorgesehene Verstärkungslage ersetzt dabei gleichzeitig die ansonsten übliche Kernfahne. Die Erfindung ermöglicht ein Vielzahl vorteilhafter Ausführungen der Verstärkung und Versteifung der Wulstbereiche und gestattet es somit, Reifen optimal auf ihren Einsatzzweck abzustimmen.

In diesem Zusammenhang kann es von Vorteil sein, wenn zumindest eine weitere textile Verstärkungslage reifeninnerseitig zwischen der Karkasseinlage und dem Kernprofil verläuft und/oder wenn zumindest eine dieser weiteren textilen Verstärkungslagen den Wulstkern zumindest teilweise umläuft.

Bei einer bevorzugten Ausführungsform der Erfindung reicht die in direktem Kontakt mit dem Wulstkern verlaufende weitere Verstärkungslage an der Seite des Hochschlages der Karkasse bis auf die Höhe h₂. Diese Maßnahme ist für den bereits erwähnten Ersatz der Kernfahne durch die Verstärkungslage von Vorteil.

Bei LKW-Reifen, die besonders belastbar sein sollen, können gemäß der Erfindung bis zu drei weitere textile Verstärkungslagen, die ausschließlich reifeninnenseitig zwischen der Karkasseinlage und dem Kernprofil verlaufen, vorgesehen sein.

Dabei lässt sich eine gezielte Verstärkung des Wulstes durch eine Anordnung erzielen, bei der das dem Wulstkern nahe Ende jeder weiteren Verstärkungslage maximal bis zum Beginn des radial innerhalb des Wulstkernes verlaufenden Abschnittes der Karkasseinlage reicht.

Besonders dauerhaltbar wird der erfindungsgemäße Gewebelageverbund dann, wenn zumindest eine der weiteren Verstärkungslagen zwischen der den Wulstkern umlaufenden Verstärkungslage und dem Kernprofil verläuft.

Alternativ dazu lässt sich eine gezielte Verstärkung des Wulstbereiches im kritischen Bereich auch dadurch erzielen, dass zumindest eine der weiteren Verstärkungslagen zwischen der den Wulstkern umlaufenden Verstärkungslage und der Karkasseinlage verläuft.

Eine weitere Möglichkeit der Beeinflussung spezieller vorteilhafter Eigenschaften der Wulstbereiche eines Reifens ist bei einem erfindungsgemäßen Gewebelagenverbund durch eine Staffelung der Enden der Verstärkungslagen gegeben. Dabei können die radial äußeren und / oder die radial inneren Enden der Verstärkungslagen zueinander gestaffelt angeordnet sein.

Bei der Erfindung ist daher die gegenseitige Anordnung der Enden von mehreren textilen Verstärkungslagen besonders variabel. Ein optimaler Bereich des gegenseitigen Abstandes der Enden benachbarter Verstärkungslagen bei Staffelung derselben liegt im Bereich zwischen 7 mm und 20 mm.

Eine weitere Möglichkeit, die Verstärkungslagen anzuordnen und somit den gesamten Lagenverbund bestimmte Eigenschaften zuzuweisen besteht in der gegenseitigen Anordnung der textilen Festigkeitsträger in den einander benachbarten Verstärkungslagen im Kreuzverband.

Schließlich ist auch die Orientierung der textilen Festigkeitsträger in den einzelnen Verstärkungslagen bezüglich der Umfangsrichtung des Reifens für die Eigenschaften und damit den Einsatzzweck des Reifens mit einem derartigen Wulstverband von Bedeutung. Hier gilt, dass der Winkel der Festigkeitsträger sehr variabel gewählt werden kann, insbesondere 4° und 80° zur Umfangsrichtung.

Weitere Merkmale, Vorteile und Einzelheiten der Erfindung werden nun anhand der Zeichnung, die mehrere Ausführungsbeispiele darstellt, näher beschrieben. Dabei zeigen
Fig. 1 schematisch einen Teilquerschnitt durch einen LKW-Reifen,
Fig. 2 bis Fig. 5 jeweils einen Querschnitt durch einen der Wulstbereiche eines LKW-Reifens mit je einer Ausführungsform der Erfindung,
Fig. 6a bis 6d Möglichkeiten der Staffelung der radial weiter außen befindlichen Enden von drei Verstärkungslagen,
Fig. 7a bis Fig7d Möglichkeiten der Staffelung der anderen Enden von drei Verstärkungslagen und
Fig. 7c bis 7h weitere Ausführungsformen der Erfindung, in welchen zwei der Verstärkungslagen unter dem Wulstkern verlaufen.

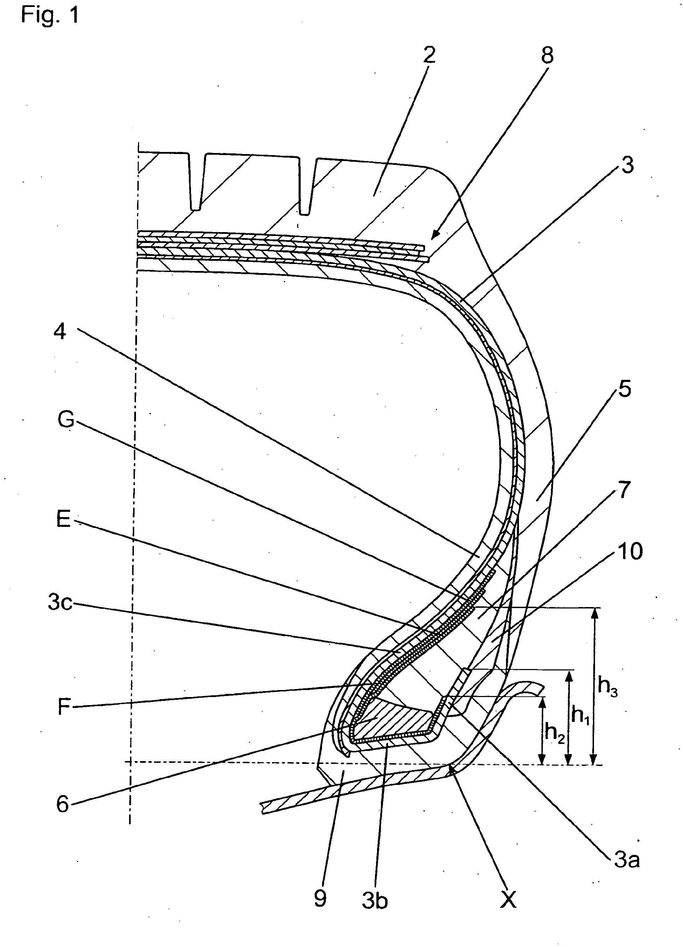

Fig. 1 zeigt schematisch die eine Hälfte eines LKW-Reifens im Querschnitt, wobei im Wulstbereich auch eine Felge angedeutet ist. Von den Bauteilen des LKW-Reifens sind ein Laufstreifen 2, eine Karkasseinlage 3, ein mehrlagiger Gürtel 8, eine insbesondere doppellagige Innenschicht 4, eine der Seitenwände 5, einer der Wulstkerne 6, eines der Kernprofile 7, eines der Wulstbänder 9 und eines der zusätzlichen Gummiprofile 10 zwischen Seitenwand 5 und Kernprofil 7 dargestellt. Die Karkasseinlage 3 weist insbesondere Stahlcorde als Festigkeitsträger auf, die im rechten Winkel bzw. im Wesentlichen im rechten Winkel zur Umfangsrichtung des Reifens verlaufen. Der Wulstkern 6 besteht aus Stahlseilen, das radial außerhalb des Wulstkernes 6 angeordnete und auf diesem sitzende Kernprofil 7 besteht aus einer Gummimischung mit einem hohen Elastizitätsmodul und kann auch mehrteilig ausgeführt sein und somit aus Gummimischungen unterschiedlicher Elastizitätsmoduli bestehen. Die Karkasseinlage 3 ist vom Gürtel 8 kommend von innen nach außen um jeden Wulstkern 6 gelegt und ist zur Erläuterung der Erfindung mit drei ineinander übergehenden Abschnitten 3a, 3b, 3c dargestellt, wobei der Abschnitt 3a der Karkasshochschlag ist, der Abschnitt 3b jener ist, welcher radial innerhalb des jeweiligen Wulstkernes 6 verläuft und der Abschnitt 3c an letzteren anschließt und in Richtung Gürtel, etwa bis zur Stelle mit der größten Reifenquerschnittsbreite, verläuft. Die Karkasseinlage 3 wird in ihrem Verlauf vorzugsweise derart ausgelegt, dass sie, wie Fig. 1 zeigt, weitgehend oder vollständig der neutralen Kontur folgt. Das Ende des Hochschlages 3a reicht bis zu einer Höhe h₁, die vom Felgeneckpunkt X in radialer Richtung gemessen wird und zwischen 17 und 70 mm beträgt.

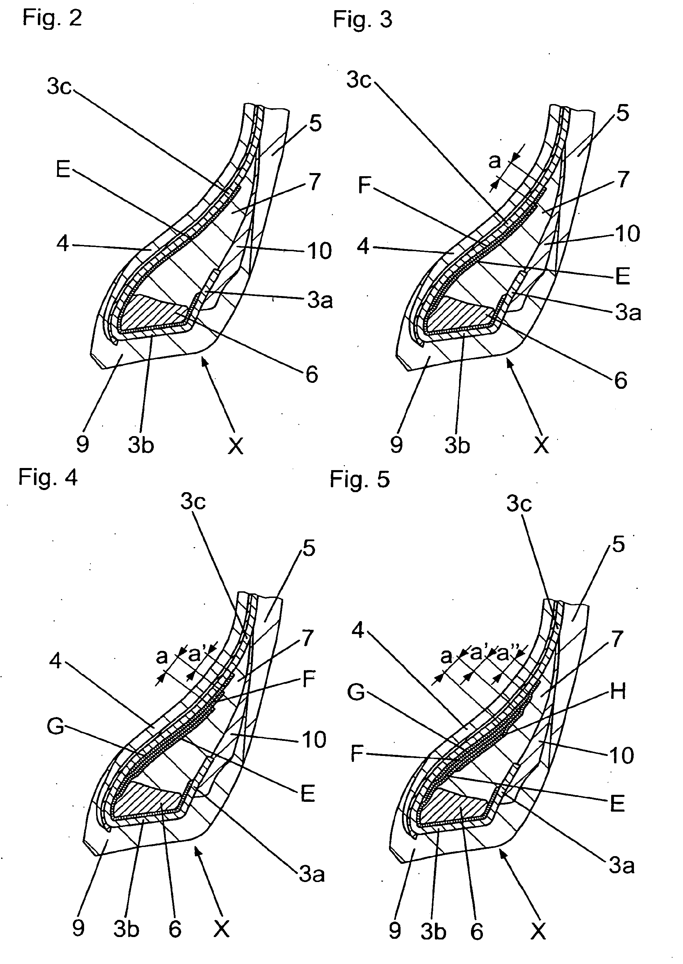

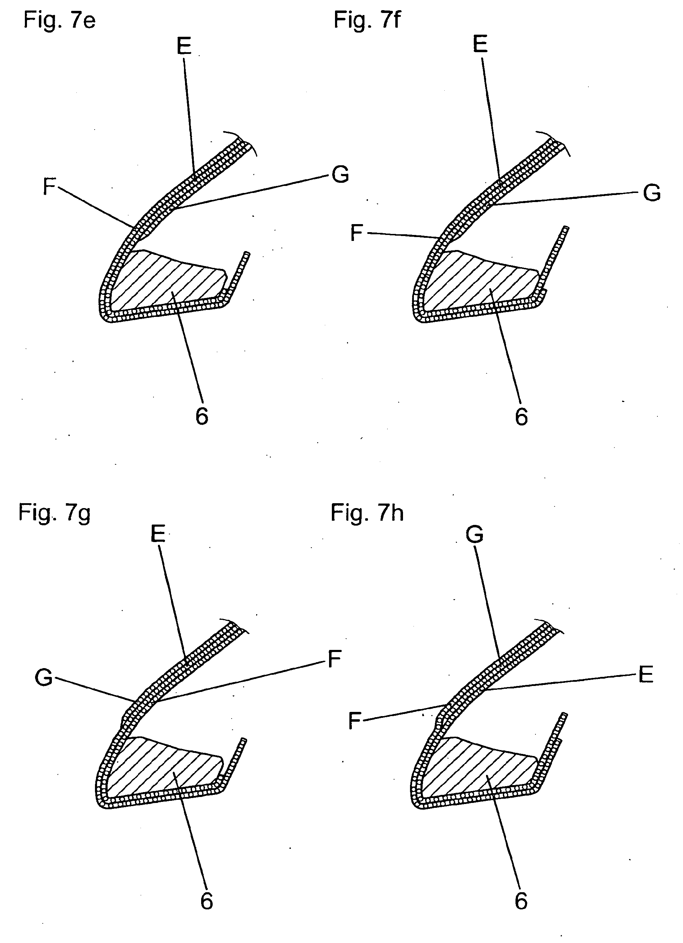

Gemäß der Erfindung sind die Wulstbereiche des Reifens auf besondere Weise, je nach Ausführungsform mit ein bis vier textilen Verstärkungslagen E bis H, verstärkt. Sämtliche Verstärkungslagen E, F, G, H sind gummierte, zugfeste textile Festigkeitsträger aufweisende Gewebelagen. Als Material für die textilen Festigkeitsträger kommen beispielsweise Polyester, Aramid oder Polyamid, aber auch Misch- oder Hybridcorde (z.B. Aramid-Polyamid) in Frage. Wie Fig. 2 bis 5 zeigen, verlaufen die Verstärkungslagen E, F, G, H zwischen dem Kernprofil 7 und dem Abschnitt 3c der Karkasseinlage 3, die drei Lagen F, G, H ausschließlich dort, die Lage E umläuft zusätzlich den Wulstkern 6 und in direktem Kontakt mit diesem. Fig.7e bis Fig. 7h zeigen Ausführungsformen mit drei Verstärkungslagen E, F, G, wobei hier eine dieser Lagen, die Lage E, den Kern 6 umläuft und eine weitere Lage, F oder G, zumindest unterhalb des Kernes 6 verläuft. Auf der Seite des Hochschlages 3a endet die Lage E vor dem Ende des Hochschlages 3a in einer Höhe h₂, die vom Felgeneckpunkt X in radialer Richtung gemessen zwischen 10 und 80 % der Hohe h₁ beträgt. An der anderen Seite des Wulstkernes 6 bzw. des Kernprofils 7 reicht die Verstärkungslage E bis auf eine vom Felgeneckpunkt X in radialer Richtung gemessen Höhe h₃, die größer ist als h₁ und zwischen dem 0,1-fachen und dem 0,47-fachen der Querschnittshöhe des Reifens beträgt. Die Höhen h₁, h₂ und h₃ sind dabei lediglich in Fig. 1 eingezeichnet, welche eine Ausführung mit drei Verstärkungslagen E, F, G im Wulstbereich zeigt.

Fig. 2 zeigt eine Ausführungsform der Erfindung, bei welcher der Wulstbereich des Reifens lediglich mit einer Lage, der Verstärkungslage E, verstärkt ist.

Bei der in Fig. 3 gezeigten Ausführungsform ist neben der Verstärkungslage E die Verstärkungslage F vorgesehen, welche sich zwischen dem Abschnitt 3c der Karkasseinlage 3 und der Verstärkungslage E befindet. Beim Wulstkern 6 beginnt die Lage F etwa bei der Hälfte der radialen Erstreckung des Wulstkerns 6. Mit ihrem zweiten Ende überragt die Verstärkungslage F die Verstärkungslage E um eine Länge a, die zwischen und 7 und 20 mm beträgt.

Die in Fig. 4 gezeigte Ausführungsform weist drei Verstärkungslagen E, F, G auf. Die Anordnung der Lage E entspricht jener der Ausführungsform gemäß Fig. 3, die Lage F befindet sich zwischen der Lage E und der Lage G, welche am Abschnitt 3c der Karkasseinlage 3 anliegt, mit ihrem einen Ende bis zum Wulstkern 6 reicht und in der radialen Richtung über das Ende der Verstärkungslage F hinausragt und zwar um eine Länge a', die zwischen 7 und 20 mm beträgt.

Bei der in Fig. 5 gezeigten Ausführungsvariante der Erfindung ist eine vierte Verstärkungslage H vorgesehen, welche zwischen dem entlang des Abschnittes 3c der Karkasseinlage 3 verlaufenden Abschnitt der den Wulstkern 6 umlaufenden Verstärkungslage E und dem Kernprofil 7 verläuft. In Richtung Wulstkern 6 beginnt die Verstärkungslage H bei der dargestellten Ausführung knapp radial außerhalb des Wulstkernes 6 und überragt mit ihrem anderen Ende sämtliche Verstärkungslagen E, F, G und die Verstärkungslage G um eine Länge a" von 7 bis 20 mm. Die Längen a, a' sind analog zu den Ausführungsformen gemäß Fig. 3 und 4 zu ermitteln.

Der Winkel, den die Textilcorde in einer der Lagen E, F, G, H mit der radialen Richtung einschließen beträgt zwischen 4° und 80°. Bei Ausführungen mit mehreren Verstärkungslagen E, F bis E, F, G, H sind diese bevorzugt im Kreuzverband angeordnet. Die in benachbarten Verstärkungslagen E, F, G, H verlaufenden Textilcorde kreuzen einander. Die Wahl der Winkel der Textilcorde in den einzelnen Verstärkungslagen E, F, G, H gestattet eine Optimierung der Haltbarkeit und Belastbarkeit der Reifenwülste, insbesondere um den Reifen für bestimmte Einsätze besonders geeignet zu machen.

Die gegenseitige Anordnung der zwei bis vier Verstärkungslagen E, F, G, H ist mit unterschiedlichen Staffelungen, ebenfalls zur Optimierung und Anpassung der Belastbarkeit des Reifens an bestimmte Einsatzzwecke, möglich.

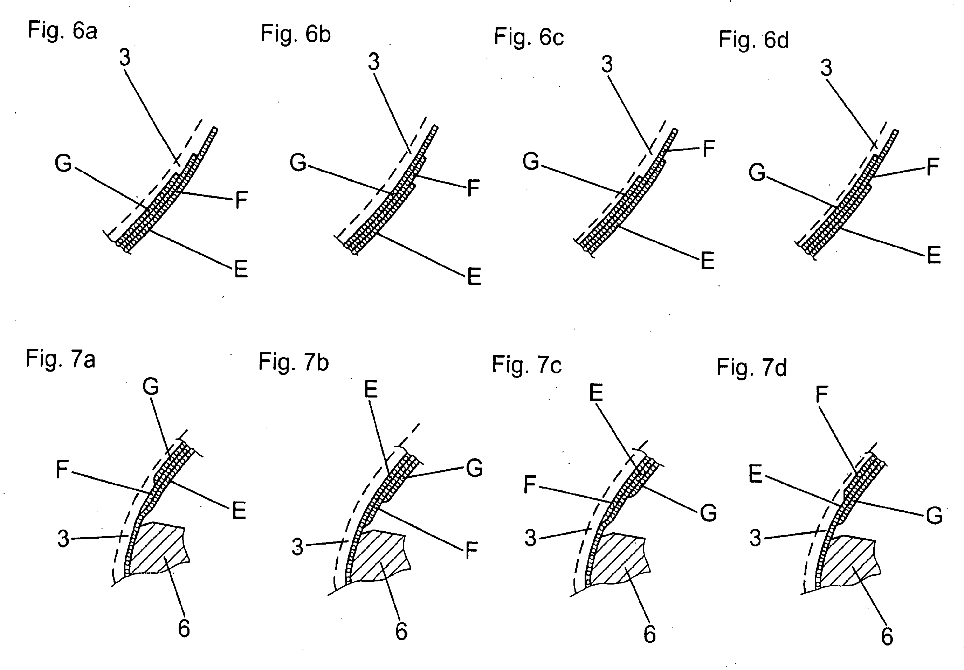

Fig. 6a und 6b zeigen anhand der Ausführung mit drei Verstärkungslagen E, F, G Varianten der Staffelung der oberen Enden. In Fig. 6a ist eine zur Karkasseinlage 3 hin offene obere Staffelung der drei Verstärkungslagen E, F, G dargestellt. Fig. 6b zeigt eine zur Karkasseinlage 3 geschlossene bzw. verdeckte Staffelung der drei Verstärkungslagen E, F, G. Bei der in Fig. 6c gezeigten Ausführung ist eine zur Karkasseinlage 3 hin geschlossene zentrierende Staffelung der drei Verstärkungslagen E, F, G vorgesehen, wobei die mittlere Lage F am Weitesten reicht und die mit der Karkasseinlage 3 in Kontakt stehende Lage G die Kürzeste ist. Bei der in Fig. 6d gezeigten Ausführung ist eine zur Karkasseinlage 3 hin offene zentrierende Staffelung vorgesehen, die mittlere Lage F ist jene, die am Weitesten reicht, die mit dem nicht dargestellten Kernprofil in Kontakt befindliche Lage E ist die Kürzeste der drei Lagen E, F, G.

Fig. 7a bis 7d zeigen Möglichkeiten der Staffelung der dem Wulstkern 6 nahen Endabschnitte von drei Verstärkungslagen E, F, G. Die Lage E ist dabei jene, die den Wulstkern 6 umläuft. Bei der Ausführungsform gemäß Fig. 7a ist die Verstärkungslage E auch jene, die in Kontakt mit dem Kernprofil verläuft, die weiteren Lagen F und G schließen in Richtung zur Karkasseinlage 3 an die Lage E an. Die beiden Lagen F und G sind zur Karkasseinlage 3 hin offen gestaffelt. Bei der in Fig. 7b gezeigten Variante ist die Verstärkungslage E jene, die in Kontakt mit der Karkasseinlage 3 ist, die beiden weiteren Lagen F und G schließen Richtung Kernprofil an, derart, dass sich eine zur Karkasseinlage 3 hin geschlossene Staffelung dieser drei Lagen E, F, G ergibt. Bei den Ausführungsformen gemäß Fig. 7c und Fig. 7d ist die Verstärkungslage E die mittlere der drei vorgesehenen Lagen E, F, G, wobei die Staffelung in Fig. 7c vorsieht, dass die Lage F näher an den Wulstkern 6 heran reicht als die Lage G, in Fig. 7d ist es umgekehrt.

Die Figuren 7e bis 7f zeigen weitere Möglichkeiten der Staffelung bzw. der Anordnung der dem Wulstkern 6 nahen Endabschnitte, hier bei Ausführungen, bei welchen zwei Verstärkungslagen um den Wulstkern 6 herum geschlagen werden und diesen zumindest teilweise umlaufen. Fig. 7e zeigt eine Staffelung auf der Außenseite des Wulstkernes 6, wobei die direkt am Wulstkern 6 anliegende Verstärkungslage E tiefer liegend endet als die weiter außen verlaufende und weiter reichende Verstärkungslage F. In Fig. 7f reicht die direkt am Wulstkern 6 anliegende Lage E weiter als das Ende der zweiten Lage F. Die Lage G ist bei diesen Varianten die am Kernprofil 6 anliegende Lage. Fig. 7g ist analog zu Fig. 7e ausgeführt, die Lage G ist in Kontakt mit der Karkasseinlage 3. In Fig. 7h enden die beiden den Wulstkern 6 umlaufenden Lagen E und F außerhalb der breitesten Erstreckung des Wulstkernes 6 an der äußeren Seite desselben, die Lage G befindet sich zwischen den Lagen E und F und endet mit dem unteren Ende entweder neben oder radial außerhalb des Wulstkernes 6.

Analoge Staffelungen und Anordnungen sind bei Ausführungsvarianten mit zwei Verstärkungslagen E und F sowie bei Ausführungsformen mit vier Verstärkungslagen E, F, G, H möglich.

Die Erfindung ist auf die dargestellten Ausführungsformen nicht eingeschränkt. So sind beispielsweise Ausführungen möglich, bei welchen die Längen der einander überragenden Abschnitte von Verstärkungslagen kleiner als 7 mm oder größer als 20 mm sind. Es ist ferner von Vorteil, wenn die Festigkeitsträger in der in radialer Richtung am Weitesten reichenden Verstärkungslage unter einem Winkel verlaufen, der dem Winkel der Festigkeitsträger in der Karkasseinlage am Nächsten kommt.

## Patentansprüche

1. Fahrzeugluftreifen, insbesondere für LKW, in radialer Bauart, mit einer ein - oder mehrlagigen Karkasseinlage (3) mit Festigkeitsträgern aus Stahlcord oder einem Werkstoff ähnlicher Festigkeit, wobei die Karkasseinlage (3) in Wulstbereichen *mit Kernprofilen (7)* um Wulstkerne (6) Hochschläge (3a) bildend umgeschlagen ist, *welche bis auf eine, bezogen auf den Felgeneckpunkt (X), in radialer Richtung gemessene Höhe h₁ reichen,* wobei die Wulstbereiche mit mehreren Verstärkungslagen (E, F, G, H) verstärkt sind, welche als Gewebelagen mit zugfesten, textilen Festigkeitsträgern ausgeführt sind, wobei eine der textilen Verstärkungslagen (E) auf der einen Seite in direktem Kontakt mit dem Wulstkern (6) und auf der anderen Seite in direktem Kontakt mit der Karkasseinlage (3) den Wulstkern (6) umläuft, reifeninnenseitig zwischen dem Kernprofil (7) und der Karkasseinlage (3) bis auf eine, bezogen auf den Felgeneckpunkt (X), in radialer Richtung gemessene Höhe h₃ reicht, die zwischen dem 0,1-Fachen und dem 0,47-Fachen der Querschnittshöhe des Reifens beträgt, und reifenaußenseitig zwischen dem Kernprofil (7) und dem Hochschlag (3a) der Karkasseinlage (3) in einem Abstand h₂ radial innerhalb des Hochschlages (3a) endet,
**dadurch gekennzeichnet,**
**dass** *die den Wulstkern (6) in direktem Kontakt mit diesem umlaufende Verstärkungslage (E) an der Seite des Hochschlages (3a) der Karkasse (3) bis auf eine, vom Felgeneckpunkt (X) aus gemessene Höhe h₂ reicht, die zwischen 10 % und 80 % der ebenfalls vom Felgeneckpunkt (X) gemessenen Höhe h₁ des Hochschlages (3a) beträgt, und dass h₂ < h₁ < h₃ gilt.*

2. Fahrzeugluftreifen nach Anspruch 1, **dadurch gekennzeichnet, dass** zumindest eine weitere textile Verstärkungslage (F, G, H) vorgesehen ist, die reifeninnerseitig zwischen der Karkasseinlage (3) und dem Kernprofil (7) verläuft.

3. Fahrzeugluftreifen nach Anspruch 2, **dadurch gekennzeichnet, dass** zumindest eine der weiteren textilen Verstärkungslagen (F) den Wulstkern (6) zumindest teilweise umläuft.

4. Fahrzeugluftreifen nach Anspruch 3, **dadurch gekennzeichnet, dass** die den Wulstkern (6) umlaufende weitere Verstärkungslage (F) an der Seite des Hochschlages (3a) der Karkasse (3) bis auf die Höhe h₂ reicht.

5. Fahrzeugluftreifen nach einem der Ansprüche 1 bis 4, **dadurch gekennzeichnet, dass** bis zu drei weitere textile Verstärkungslagen (F, G, H) vorgesehen sind.

6. Fahrzeugluftreifen nach einem der Ansprüche 1 bis 5, **dadurch gekennzeichnet, dass** das dem Wulstkern (6) nahe Ende jeder weiteren Verstärkungslage (F, G, H) maximal bis zum Beginn des radial innerhalb des Wulstkernes (6) verlaufenden Abschnittes (3b) der Karkasseinlage (3) reicht.

7. Fahrzeugluftreifen nach einem der Ansprüche 1 bis 6, **dadurch gekennzeichnet, dass** zumindest eine der weiteren Verstärkungslagen (F, G, H) zwischen der den Wulstkern (6) umlaufenden Verstärkungslage (E) und dem Kernprofil (6) verläuft.

8. Fahrzeugluftreifen nach einem der Ansprüche 1 bis 6, **dadurch gekennzeichnet, dass** zumindest eine der weiteren Verstärkungslagen (F, G, H) zwischen der den Wulstkern (6) umlaufenden Verstärkungslage (E) und der Karkasseinlage (3) verläuft.

9. Fahrzeugluftreifen nach einem der Ansprüche 1 bis 8, **dadurch gekennzeichnet, dass** die radial äußeren und / oder radial inneren Enden der Verstärkungslagen (E, F; E, F, G; E, F, G, H) zueinander gestaffelt angeordnet sind.

10. Fahrzeugluftreifen nach Anspruch 9, **dadurch gekennzeichnet, dass** die gegenseitigen Abstände (a, a', a") der gestaffelten Enden benachbarter Verstärkungslagen (E, F; E, F, G; E, F, G, H) 7 mm bis 20 mm betragen.

11. Fahrzeugluftreifen nach einem der Ansprüche 1 bis 10, **dadurch gekennzeichnet, dass** die textilen Festigkeitsträger in einander benachbarten Verstärkungslagen (E, F; E, F, G; E, F, G, H) im Kreuzverband angeordnet sind.

12. Fahrzeugluftreifen nach einem der Ansprüche 1 bis 11, **dadurch gekennzeichnet, dass** die textilen Festigkeitsträger in den Verstärkungslagen (E, F, G, H) mit der Umfangsrichtung des Reifens einen Winkel einschließen, welcher zwischen 4° und 80° beträgt.

13. Fahrzeugluftreifen nach einem der Ansprüche 1 bis 12, **dadurch gekennzeichnet, dass** die Karkasseinlage (3) in ihrem innerhalb der Seitenwand verlaufenden Abschnitt (3c) weitgehend oder vollständig der Neutralenkontur folgt.

14. Fahrzeugluftreifen nach einem der Ansprüche 1 bis 13, **dadurch gekennzeichnet, dass** das Kernprofil (7) mehrteilig ausgeführt ist und aus Gummimischungen unterschiedlicher Elastizitätsmoduli besteht.

## Claims

1. Pneumatic vehicle tire, in particular for trucks, of a radial type of construction, with a single-ply or multi-ply carcass insert (3) with reinforcing elements of steel cord or a material of similar strength, the carcass insert (3) being turned back in bead regions having bead fillers (7) about bead cores (6) to form turn-ups (3a) which reach up to a height h₁ with reference to the rim transition point (X), measured in the radial direction, the bead regions being reinforced with a number of reinforcing plies (E, F, G, H) which take the form of fabric plies with tension-resistant, textile reinforcing elements, one of the textile reinforcing plies (E) running around the bead core (6), on one side in direct contact with the bead core (6) and on the other side in direct contact with the carcass insert (3), reaching on the inner side of the tire, between the bead filler (7) and the carcass insert (3), up to a height h₃ with reference to the rim transition point (X), measured in the radial direction, that is between 0.1 and 0.47 of the cross-sectional height of the tire and ending on the outer side of the tire, between the bead filler (7) and the turn-up (3a) of the carcass insert (3), at a distance h₂ radially inside the turn-up (3a), **characterized in that** the reinforcing ply (E) running around the bead core (6) in direct contact therewith reaches, on the side of the turn-up (3a) of the carcass (3), up to a height h₂, measured from the rim transition point (X), that is between 10% and 80% of the height h₁ of the turn-up (3a), likewise measured from the rim transition point (X), and **in that** h₂ < h₁ < h₃.

2. Pneumatic vehicle tire according to Claim 1, **characterized in that** at least one further textile reinforcing ply (F, G, H) is provided, extending on the inside of the tire between the carcass insert (3) and the bead filler (7).

3. Pneumatic vehicle tire according to Claim 2, **characterized in that** at least one of the further textile reinforcing plies (F) runs at least partially around the bead core (6).

4. Pneumatic vehicle tire according to Claim 3, **characterized in that** the further reinforcing ply (F) running around the bead core (6) reaches, on the side of the turn-up (3a) of the carcass (3), up to the height h₂.

5. Pneumatic vehicle tire according to one of Claims 1 to 4, **characterized in that** up to three further textile reinforcing plies (F, G, H) are provided.

6. Pneumatic vehicle tire according to one of Claims 1 to 5, **characterized in that** the end near the bead core (6) of each further reinforcing ply (F, G, H) reaches at most up to the beginning of the portion (3b) of the carcass insert (3) extending radially inside the bead core (7).

7. Pneumatic vehicle tire according to one of Claims 1 to 6, **characterized in that** at least one of the further reinforcing plies (F, G, H) extends between the reinforcing ply (E) running around the bead core (6) and the bead filler (7).

8. Pneumatic vehicle tire according to one of Claims 1 to 6, **characterized in that** at least one of the further reinforcing plies (F, G, H) extends between the reinforcing ply (E) running around the bead core (6) and the carcass insert (3).

9. Pneumatic vehicle tire according to one of Claims 1 to 8, **characterized in that** the radially outer and/or radially inner ends of the reinforcing plies (E, F; E, F, G; E, F, G, H) are arranged such that they are staggered in relation to one another.

10. Pneumatic vehicle tire according to Claim 9, **characterized in that** the distances (a, a', a") between the staggered ends of neighboring reinforcing plies (E, F; E, F, G; E, F, G, H) are 7 mm to 20 mm.

11. Pneumatic vehicle tire according to one of Claims 1 to 10, **characterized in that** the textile reinforcing elements in reinforcing plies (E, F; E, F, G; E, F, G, H) neighboring one another are arranged in a cross bracing assembly.

12. Pneumatic vehicle tire according to one of Claims 1 to 11, **characterized in that** the textile reinforcing elements in the reinforcing plies (E, F, G, H) form an included angle with the circumferential direction of the tire which is between 4° and 80°.

13. Pneumatic vehicle tire according to one of Claims 1 to 12, **characterized in that**, in its portion (3c) extending inside the sidewall, the carcass insert (3) largely or completely follows the neutral contour.

14. Pneumatic vehicle tire according to one of Claims 1 to 13, **characterized in that** the bead filler (7) is of a multi-part form and consists of rubber mixtures of different moduli of elasticity.

## Revendications

1. Bandage pneumatique pour roue de véhicule, de type radial, en particulier pour camion, et présentant une garniture de carcasse (3) en une ou plusieurs couches, dotée de renforts en fil d'acier ou en un matériau de résistance mécanique similaire,
la garniture de carcasse (3) étant rabattue au niveau des bourrelets autour d'âmes (6) de bourrelets en formant des rabats (3a), avec des profilés d'âme (7) qui s'étendent jusqu'à une hauteur h₁ mesurée dans la direction radiale par rapport au point (X) du col de jante, les parties de bourrelet étant renforcées par plusieurs couches de renfort (E, F, G, H) configurées comme couches de tissu dotées de renforts textiles résistants à la traction,
la couche textile de renfort (E) entourant l'âme (6) de bourrelet, en contact direct avec l'âme (6) de bourrelet d'un côté et en contact direct avec la garniture de carcasse (3) sur l'autre côté, et s'étendant du côté intérieur du bandage de roue entre le profilé (7) d'âme et la garniture de carcasse (3) jusqu'à une hauteur h₃, mesurée dans la direction radiale, par rapport au point (X) de col de jante, la hauteur h₃ représentant entre 0,1 fois et 0,47 fois la hauteur de la section transversale du bandage de roue et se terminant du côté extérieur du bandage de roue, entre le profilé (7) d'âme et le rabat (3a) de la garniture de carcasse (3), à une hauteur h₂ située radialement à l'intérieur du rabat (3a),
**caractérisé en ce que**
la couche de renfort (E) qui entoure l'âme (6) de bourrelet en contact direct avec cette dernière s'étend sur le côté du rabat (3a) de la carcasse (3) jusqu'à une hauteur h₂, mesurée à partir du point (X) de col de la jante, qui représente entre 10 % et 80 % de la hauteur h₁ du rabat (3a), également mesurée à partir du point (X) du col de la jante, et
**en ce que** h₂ < h₁ < h₃.

2. Bandage pneumatique pour roue de véhicule selon la revendication 1, **caractérisé en ce qu'**au moins une autre couche textile de renfort (F, G, H) est prévue et s'étend du côté intérieur du bandage de roue entre la garniture de carcasse (3) et le profilé (7) d'âme.

3. Bandage pneumatique pour roue de véhicule selon la revendication 2, **caractérisé en ce qu'**au moins l'une des autres couches textiles de renfort (F) entoure au moins en partie l'âme (6) de bourrelet.

4. Bandage pneumatique pour roue de véhicule selon la revendication 3, **caractérisé en ce que** l'autre couche de renfort (F) qui entoure l'âme (6) de bourrelet s'étend jusqu'à la hauteur h₂ sur le côté du rabat (3a) de la carcasse (3).

5. Bandage pneumatique pour roue de véhicule selon l'une des revendications 1 à 4, **caractérisé en ce qu'**il présente jusque trois autres couches textiles de renfort (F, G, H).

6. Bandage pneumatique pour roue de véhicule selon l'une des revendications 1 à 5, **caractérisé en ce que** l'extrémité, proche de l'âme (6) de bourrelet, de chaque autre couche de renfort (F, G, H) s'étend au plus jusqu'au début de la partie (3b) qui s'étend radialement à l'intérieur de l'âme (6) de bourrelet de la garniture de carcasse (3).

7. Bandage pneumatique pour roue de véhicule selon l'une des revendications 1 à 6, **caractérisé en ce qu'**au moins l'une des autres couches de renfort (F, G, H) s'étend entre la couche de renfort (E) qui entoure l'âme (6) de bourrelet et le profilé d'âme (7).

8. Bandage pneumatique pour roue de véhicule selon l'une des revendications 1 à 6, **caractérisé en ce qu'**au moins l'une des autres couches de renfort (F, G, H) s'étend entre la couche de renfort (E) qui entoure l'âme (6) de bourrelet et la garniture de carcasse (3).

9. Bandage pneumatique pour roue de véhicule selon l'une des revendications 1 à 8, **caractérisé en ce que** les extrémités, situées radialement à l'extérieur et/ou radialement à l'intérieur, des couches de renfort (E, F; E, F, G; E, F, G, H) sont disposées de manière échelonnée les unes par rapport aux autres.

10. Bandage pneumatique pour roue de véhicule selon la revendication 9, **caractérisé en ce que** les distances mutuelles (a, a', a") des extrémités échelonnées de couches de renfort (E, F; E, F, G; E, F, G, H) voisines sont comprises entre 7 mm et 20 mm.

11. Bandage pneumatique pour roue de véhicule selon l'une des revendications 1 à 10, **caractérisé en ce que** les renforts textiles sont disposés en croisements dans des couches de renfort (E, F; E, F, G; E, F, G, H) mutuellement voisines.

12. Bandage pneumatique pour roue de véhicule selon l'une des revendications 1 à 11, **caractérisé en ce que** les renforts textiles des couches de renfort (E, F, G, H) forment avec la direction périphérique du bandage de roue un angle compris entre 4° et 80°.

13. Bandage pneumatique pour roue de véhicule selon l'une des revendications 1 à 12, **caractérisé en ce que** la garniture de carcasse (3) suit largement ou complètement le contour neutre dans sa partie (3c) qui s'étend à l'intérieur de la paroi latérale.

14. Bandage pneumatique pour roue de véhicule selon l'une des revendications 1 à 13, **caractérisé en ce que** le profilé d'âme (7) est réalisé en plusieurs pièces et est constitué de mélanges de caoutchoucs qui présentent des modules d'élasticité différents.
